# EUROPEAN PATENT APPLICATION

(11) **EP 1 158 491 A2**
(43) Date of publication of application: **28.11.2001**
(21) Application number: 01304513.3
(22) Date of filing: 23.05.2001
(51) Int. Cl.: G10L 15/26

(54) **Personal data spoken input and retrieval**

(30) Priority: 23.05.2000 GB 0012536; 04.09.2000 GB 0021678
(71) Applicant: Vocalis Limited, Great Shelford, Cambridge CB2 5LD (GB)
(72) Inventor: Bankrook, Michael, Bury St. Edmunds, Suffolk, IP28 8SG (GB); Robinson, Kerry, London, SE24 0AF (GB)
(74) Representative: Gosnall, Toby

(57) **Abstract**

A method of operating a computer to identify information desired by a user, comprising: receiving a first input signal corresponding to first data associated with the information; applying a first recognition process to the first input signal to derive a plurality of possible candidate values for the first data; receiving a second input signal corresponding to second data associated with the first; and applying a second recognition process to the second input signal to derive a one or more candidate values for the second data; characterised by jointly utilising the first and second data to identify the information.

## Description

This invention relates to recognition of an input signal, and to retrieval of corresponding data. This invention relates particularly, but not exclusively, to the recognition of an input voice signal (i.e. speech recognition). It may be implemented at, for example, an automated call centre.

Many tasks performed by call centers are repetitive and time consuming, such as obtaining the caller's name and address or other details. It would be desirable to automate these tasks using speech recognition apparatus. However, this has proved impossible in the past, because the accuracy of current recognisers is not sufficiently high (leading to confusion, for example in the letters or digits of a post code) or the number of words to recognise is too great (there are 60 million names in the UK). Because of these problems, the normal methods of resolving doubt or ambiguity in speech recognition (such as by reciting several possible options and asking the user to select one) are unusable because the number of options is too great.

Such a prior art recognition technique is described in International Patent application WO 00/05710 in the name of British Telecommunications plc. The teachings of this document are to perform separate recognitions on different, but related, pieces of information (for example a post code, and address, etc.). Each of the recognitions provides a set of results containing possible matches. The two resulting sets are combined using a set operation to obtain a result set, which is further processed to obtain a final result.

The present invention aims to increase the accuracy achievable using error-prone recognisers such as speech recognisers, and hence to make such recognisers usable in, for example, tasks of the type mentioned above.

In one aspect, the invention operates to input two pieces of data from a user (represented as two different speech signals, for example); and to perform recognition on each of the two; and jointly to determine the identity of an input signal based on both pieces of data.

In one preferred embodiment, one of the pieces of data is recognised first, and used to constrain the possible candidate values for recognition when recognising the second piece of data. For example, the results of post code recognition are used to select a range of possible names or addresses of persons having the post code or post codes recognised and these possible names or addresses are matched against the input signal. This significantly increases recognition speed and accuracy by constraining the number of possible candidates.

Additionally or alternatively, the recognition results for one piece of information are used to validate those for another. For example, recognition is performed on input post code and address speech data, and candidate addresses are compared with all possible addresses for the candidate post codes (or vice versa).

In one particular embodiment, the first and second information is held in respective fields of a database, and are used to select a record from the database; for example, a record corresponding to a person.

In one particular embodiment, the first data may be in a relatively constrained format (for example a post code, a vehicle registration number, or a personal identification number which comprises a sequence of predetermined length or format) and the second information may be substantially less constrained (for example, it may be essentially free text data such as address or name data).

Normally, it would be difficult to employ error prone recognition such as speech recognition to detect the second data, but by using the first data to derive a limited number of possible values for the second data, this difficulty is overcome. It is known that as the number of entries increases against which it is attempted to make a recognition the chances of that recognition being successful decreases, and therefore, using the first recognition to reduce the data against which the second recognition is made can greatly increase the chances of success.

According to a further aspect of the invention there is provided a computer readable medium containing instructions to cause a processor to carry out the method according to another aspect of the invention.

The medium may be a floppy disc, a CD-ROM, a DVD disc, a writeable DVD disc, a magneto optical disc, etc., or may be a transmitted signal, including an internet download, etc.

Other aspects, embodiments and preferred features of the invention will be apparent from the following description, claims and drawings.

Embodiments of the invention will now be described, by way of example only, with reference to the accompanying drawings, in which:
**Figure 1** is a block diagram showing the apparatus present in a first embodiment of the invention;
**Figure 2** is a block diagram showing the programs present in the embodiment of Figure 1;
**Figure 3** is a diagram showing the elements present in a database forming part of Figure 2;
**Figure 4** shows the structure of a post code;
**Figure 5** is a flow diagram showing schematically the process performed by the embodiment of Figure 1;
**Figure 6** is a flow diagram showing in greater detail the process performed in a stage of Figure 5;
**Figure 7** is an illustrative diagram showing the operation of the embodiment of Figure 1; and
**Figure 8** schematically shows the principle behind the invention.

The first embodiment of the invention will now be described with reference to the drawings. This embodiment uses speech recognition to a user's post code, for example as part of a call centre operation such as handling a complaint or making a sale.

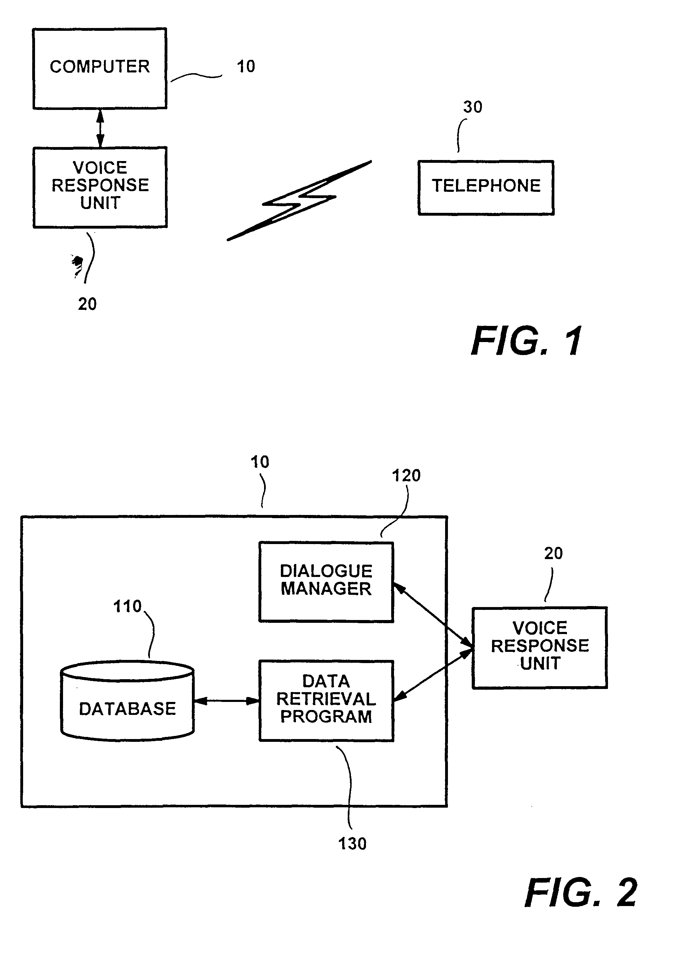

Referring to Figure 1, the apparatus for performing the embodiment comprises a computer 10 such as a server computer, coupled to a voice response unit 20, which in turn is coupled via a telecommunications channel to the telephone 30 of a user.

The voice response unit comprises a circuit board coupled to a telephone line interface, and having a speech synthesiser (i.e. a text to speech converter) and a speech recogniser. The speech synthesiser may consist of a system to concatenate and play pre-recorded prompts, or any one of a variety of commercially available text to speech products and will not be discussed further.

The speech recogniser may for example be the Speechware™ recogniser available from Vocalis Limited of Chaston House, Mill Court, Great Shelford, Cambridge CB2 SLD. The speech recogniser is typically arranged to perform speaker-independent speech recognition; in this embodiment, conveniently by recognising phonemes (or, to be more specific, allophones or triphones, comprising a particular phoneme in combination with the transition to or from another phoneme).

The speech recogniser is arranged to accept a dynamic "grammar" or list of possible candidate utterances, each of which is specified as a string of phonemes (which correspond to a word or phrase). Thus, at a given point in a dialogue, the speech recogniser may be supplied with candidates corresponding only to the required responses (such as "yes/no", or digits, or predetermined words or phrases). This accelerates the recognition process by reducing the number of candidate utterances against which an input speech signal must be compared, and hence accelerates recognition and renders it more accurate.

The speech recogniser is arranged to calculate a measure of the similarity between the input speech signal from the telephone 30 and each of the candidates in the grammar, and to output 0, 1 or a plurality of candidates with similarity measures in excess of a minimum acceptable threshold, each being ranked in order of similarity measure.

Referring to Figure 2, the computer 10 comprises a database 110, discussed in greater detail below. In addition to a conventional operating system and other utility programs, the computer 10 operates a dialogue manager program 120 and a data retrieval program 130, to be discussed below.

The dialogue manager program, in known fashion, controls the interaction between the voice response unit 20 and the user of the telephone 30, by supplying text to the voice response unit for speech synthesis or pre-recorded prompt play-out, and supplying text (corresponding to the user's anticipated answers to the synthesised speech) to the speech recogniser, at which they are converted into the candidates of the dynamic grammar.

The data retrieval program 130 is arranged to accept the list of candidates detected by the speech recogniser, together with their similarity measure and ranking.

From these, and by accessing the database 110, the data retrieval program 130 is arranged to locate the record which contains data matching the data uttered by the user of the telephone 30, and return that record for output or further processing by the computer 10.

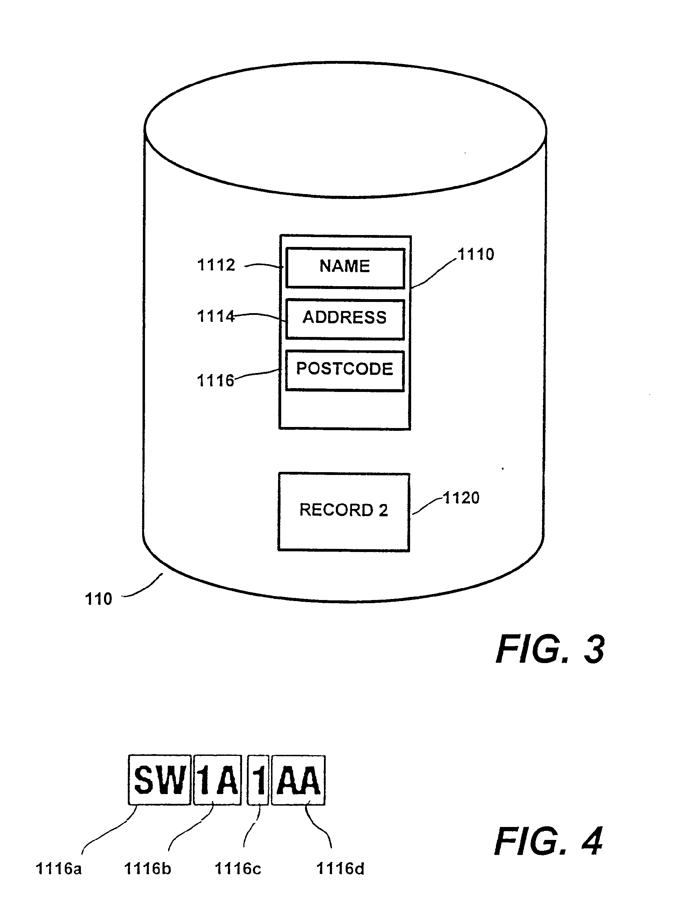

Referring to Figure 3, the database 110 contains a plurality of records 1110, 1120..., each of which contains a plurality of fields 1112, 1114, 1116....

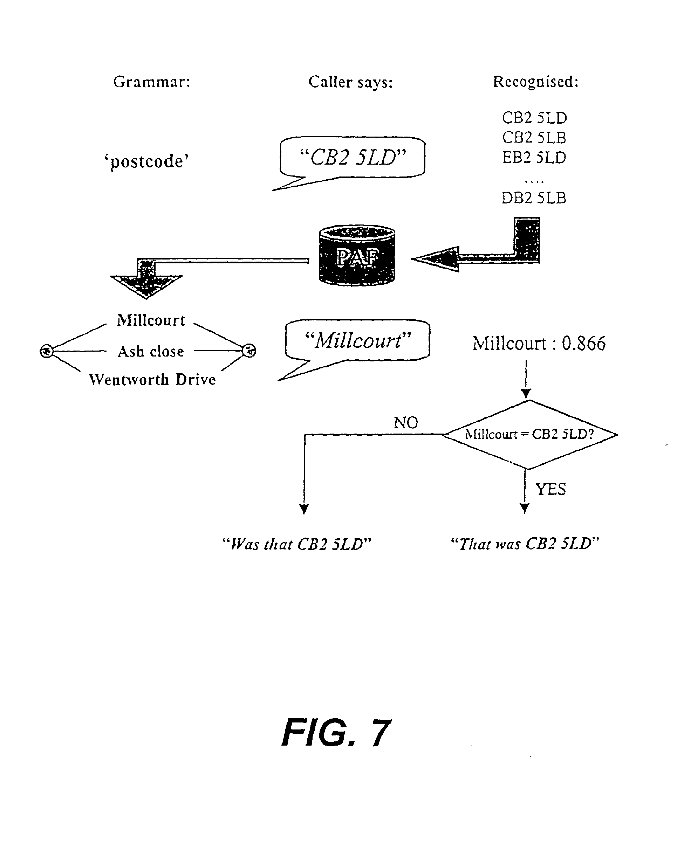

For example, in this embodiment, the database is the Royal Mail postal address file (PAF), which includes a first field 1114 containing one or more street addresses; and a second field 1116 containing a post code. Each valid post code maps to one or a small number of street names (see Figure 7).

The street addresses are in the form of text fields. Each record has, in the address field 1112, one or a small number of street names, which are described by the same post code. Each record has a unique post code field 1114.

Referring to Figure 4, each post code comprises a post code area portion 1114a having one or two alpha characters which identify the main office through which the mail will be processed; followed by a post code district portion 1114b comprising one or two characters - usually numeric except in central London. These normally relate to the areas covered by delivery offices. Following this is a sector portion 1114c comprising a digit which defines a district or neighbourhood; and finally a unit code portion 1114d comprising two letters which identify a group of up to 80 addresses, (typically corresponding to one or a small number of streets).

The letter sounds in the post code are very easily confused. This means that computer based speech recognition systems are very likely to substitute letters or combinations of letters with incorrect ones.

If the speech recogniser were to attempt to recognise a post code directly, selecting only the recognition output with the highest similarity measure can lead to an accuracy of less than 30%. However, in the other 70% of cases where the correct post code was not the highest ranked output from the speech synthesiser, it is likely that it will be within the N1 (where N1 is a relatively small number - perhaps up to 100) possible candidates output by the speech recogniser.

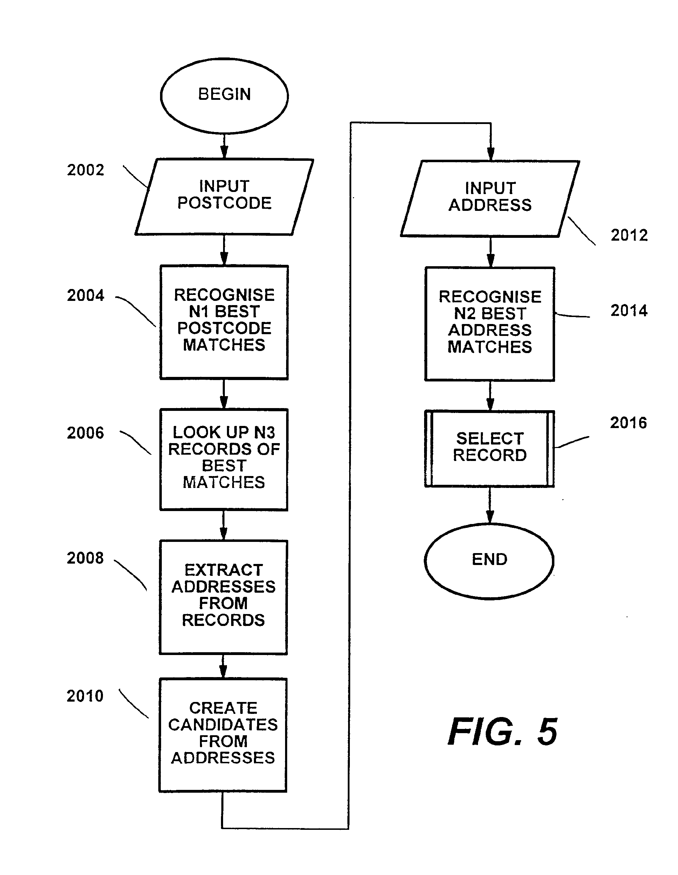

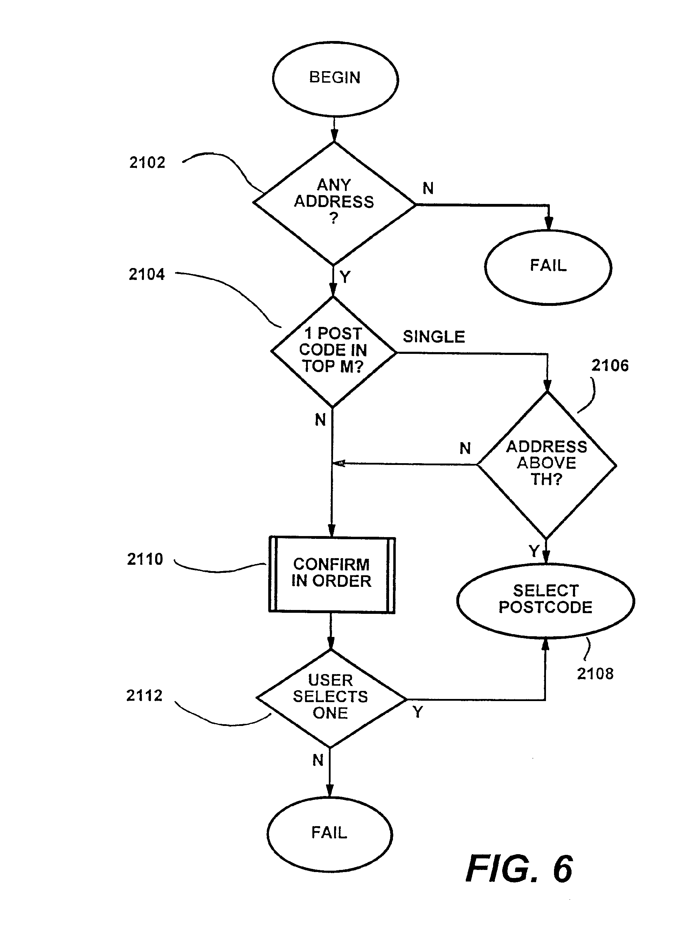

As indicated in Figure 7, this embodiment operates to detect the post code (and associated address) by inputting the post code and street name or full address via the telephone 30 and voice response unit 20. The operation of the embodiment will now be described in greater detail with reference to Figures 5 and 6.

In a step 2002, the dialogue manager program 120 causes the voice response unit 20 to generate speech requesting the user to supply their post code, and supplies to the speech recogniser a constrained grammar (i.e. list of candidate strings) specifying, for example, that the candidate output should consist of phoneme strings corresponding to:
(1 or 2 letters) (1 or 2 characters) (1 digit) (2 letters).

Preferably, the list is fully constrained on the post code area and district, in other words it is limited to only valid entries. The sector and unit code portions are constrained by their structure only (i.e. to specify the number of letters and/or digits concerned).

The speech recogniser then, in step 2004, looks for the N1 best post code matches, where N1 is a number typically less than 100, and in this embodiment, typically 20-40. The recogniser outputs the recognised post codes, in a ranked list according to the value of the similarity measure for each post code (i.e. the measure of how similar the candidate post code is to the input speech), each together in this embodiment with the similarity measure.

Next, in step 2006, the data retrieval program 130 generates a query (for example an SQL query) to the database 110, to return the N3 records which contain within their post code fields the post codes output from the recogniser. If the post code recognition task is not completely constrained to valid post codes in the database 110, the number of records returned (N3) is typically smaller than the number of hypothesised post codes (N1). (In embodiments where a given post code may be held in multiple records, a correspondingly larger number of records are returned).

In step 2008, for each post code, the data retrieval program 130 extracts the addresses from the address fields of those records to form a list N4. Each address is then converted into a string of phonemes, and the list of phoneme strings (i.e. the located addresses) is supplied, as a dynamic grammar, to the recogniser in step 2010. The number of entries in the address grammar will be a small multiple of the number N3. The number of entries in the address grammar can be greater than N3 because it is possible for multiple streets to share a post code.

In step 2012, the dialogue manager program 120 outputs a verbal prompt via the speech synthesiser to request the user to input their address, and the speech recogniser attempts to detect the candidate addresses within the input speech from the phone 30, in step 2014. The recognition in this step is constrained to the list of addresses held in N4, and cannot recognise any further addresses.

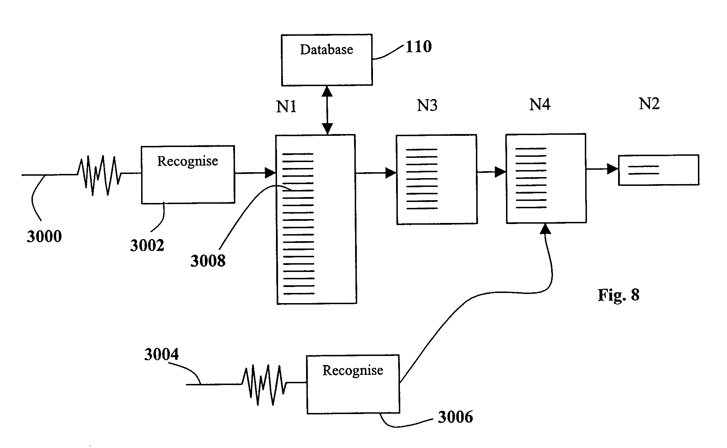

As shown in Figure 8 the post code voice input 3000 is recognised 3002 to generate the N1 possibilities. These N1 recognised possibilities are compared to the database 110 to generate a reduced list N3. A list of addresses N4 corresponding to each of the post codes in list N3 is generated from the data held within the database 110. Then an address voice input 3004 is made and recognised 3006. This recognition is compared with only the possibilities in the list N4 to produce a list N2, which is utilised as described hereinafter. Thus, the first recognition 3002 has been used to constrain the second recognition 3306 and increase the overall chances of recognition. It is assumed that, on their own, the recognition processes will be incorrect, i.e. that the correct result 3008 of the first recognition 3000 will not be at the top of the N1 list.

The top N2 recognised addresses (where N2 is typically 1, but may be more) are supplied to the data retrieval program, and in step 2016 the data retrieval program selects one of the records previously located from the database 110, as described in greater detail below.

Referring to Figure 6, the selection step 2016 in this embodiment is carried out as follows.

In step 2102, the data retrieval program 130 determines whether or not an address is recognised. An address may not be recognised for three reasons:
1. The true post code was not in the list of N1 candidate post codes output by the recogniser.
2. The phoneme transcription of the address was not close enough, or the user said the wrong address.
3. It is a new post code that was not in the database.

In this case, whilst it is possible that the actual post code is one of those output by the recogniser, and perhaps the highest ranked, the address data fails to verify the fact, and accordingly only a LOW confidence can be accorded to the recognition. The implicit confirmation process is deemed to have failed, and some suitable action is taken (such as asking the user to repeat the address utterance, supplying the highest-ranked post code for confirmation by the user, re-running the entire dialogue or transferring the call to a human operator).

In step 2014, the data retrieval program determines whether any of the candidate addresses recognised corresponds to (i.e. is stored in the same record as) one and only one of the top M (where M is typically 1, but may be greater) post codes within the N1 recognised post codes. If this is the case, in step 2016 the data retrieval program determines whether the corresponding address recognition has a confidence above a (relatively high) threshold. If so then the combined recognition is assumed to have a HIGH confidence and the post code is selected (step 2108) without explicit confirmation by the caller.

If the recognised address (es) correspond with post codes that are not within the top M recognised post codes, or more than one post code matches the recognised address(es), or a single address corresponding to one of the top M recognised post codes does not have high confidence, then the post code(s) corresponding to the recognised address(es) are offered to the user in rank order, for explicit confirmation (step 2110).

In step 2110, the dialogue manager program 120 performs a confirmatory dialogue (e.g. "is the post code.....?"), allowing the user to confirm or otherwise each post code in the subset of the N1 candidate post codes that correspond with the recognised address(es). These post codes are offered in rank order. If the user is detected as replying "yes" (step 2112), then the confirmed post code is selected as being correct.

If the user rejects all of the post codes offered (step 2112), the confirmation process is deemed to have failed. At this point the system can:
1) Attempt to re-recognise the address using a new address grammar, derived from a subset of the N1 recognised post codes, with rejected post codes removed. The speech for this recognition could come from a recording of the users previous utterance, but typically, the user is asked to repeat their address.
2) Offer the top post code result, if this has not already been rejected.
3) Pass the user to a human operator.

Thus, to summarise, if the confidence is HIGH, the post code is selected without a confirmatory dialogue; if the confidence is LOW, the dialogue can be repeated, the best post code can be offered to the user for confirmation or the user can be transferred to an operator; and if the confidence level is MEDIUM, the dialogue continues to confirm the matching post codes in order of their ranking. If this fails, then the system can attempt to re-recognise the address, offer the top post code result if it has not already been rejected, repeat the dialogue or transfer the user to an operator.

Thus, the above embodiment demonstrates two key techniques:
1. Using the results of an N-best recognition on an easily confused utterance (e.g. a post code) to create a "context specific dynamic grammar" (i.e. a set of possible candidate utterances for recognition), in this case represented by sequences of phonemes (or more particularly triphones or other phones). This is used to ask for redundant or complementary information (e.g. the address in this case). The complementary information is typically a recognition task which would be impossible (too many words or unknown words) without the use of the context specific grammar, which constrains the number of possible candidates (e.g. addresses). The redundant or complementary information can be used to verify which of the N-best list is the correct answer.
2. Using the result of the second recognition in conjunction with the N-best list and an application specific knowledge source (e.g. the database) to intelligently select the correct result from the N-best list (or to reliably conclude that the correct result is not there).

These techniques lead to accurate and extremely reliable rejection of incorrect possibilities, and allow otherwise intractable recognition tasks to be accomplished with a very high degree of confidence in the result - a key requirement for transaction success in a real world application.

The method may be performed on or off-line. Off-line is intended to mean the recognition of data from a recorded medium, whereas on-line in intended to cover situations where a user is speaking directly to the apparatus. In situations in which the method is being performed off-line the method may simply select the best result available, and not undergo any user interaction to try and clarify the actual result.

### OTHER EMBODIMENTS

It is clear that the above technique can be applied to a wide range of situations. Where there is a recognition task that is impractical due to size or accuracy problems, but where other redundant or complementary information exists, then this technique can improve the prospects for automating the task by use of speech recognition technology. This can be done in two ways:
1. As described above, inputting the first information (for example a post code) that is the information which is actually required, and then generating a grammar (i.e. a set of possible candidate values) for the second information using the results of the first, and then inputting the second information to validate the first.
2. Inputting the first information, generating a grammar based on the result which is now a smaller and a more manageable size, and then asking for actually desired information and using the generated grammar to recognise it.
   An example of the first case is the post code system above where the street name merely validates the hypothesis.

### Name identity recognition

An embodiment which uses the second method described above would be a name recognition system. The required information here is the name of a person, but the recognition task is impractical since there are 60 million names in the UK.

In this case, the database used would have a record for each person including a name field, address field and post code field. It may be based, for example, on the electoral roll database. As in the first embodiment, the user speaks the post code and address, and from these inputs, a set of records is located which share that post code and address (perhaps on the order of 200 records, corresponding to 200 people or 80 households).

The names are then extracted from the name fields of the records thus located, and the set of names is used to generate a corresponding set of candidates (i.e. a dynamic grammar) for use by the recogniser. The user is then asked to input the name desired, and the highest-ranking one of the candidates is selected.

This embodiment may be used, for example, for automated directory enquiries. In this case, having retrieved the desired record, information from a further field of the record (i.e. the telephone number of the person named) may be output via the speech synthesiser.

It will be clear that other embodiments may use the same principle of performing a mufti-stage recognition; here, first using the address to validate the post code and then using the address and post code to generate a list to recognise the names.

### Vehicle registration recognition

In this embodiment, a police officer, for example, may wish to retrieve a record for a given vehicle, the registration number of which he has obtained.

The vehicle registration numbers are typically constrained in format to comprise a sequence of letters and numbers in a similar way to post codes, as described above.

At the Driver and Vehicle Licensing Agency (DVLA) a registration database has an entry for each vehicle registration number, storing the registration number, the car model, descriptive data (such as colour) and the name and address of the owner, in separate fields.

As with post codes, there are difficulties in unambiguously recognising the vehicle registration number. In this embodiment, therefore, the vehicle registration number is input by the user via the telephone to the apparatus of the embodiment (similar to that described above), and the N possible recognised registration numbers are used to retrieve from the DVLA database the corresponding car model and description data entries, which are then used to compile a dynamic grammar.

The user then utters the car model (or description), which is treated in the same manner as the address data in the first embodiment above, to validate the vehicle registration number.

### Spelling

The user spells a word, or part of it. An N-best recognition is performed. The spelling hypotheses are then compared (conveniently using fuzzy searching techniques) with a list of possible words. The top P (where P is 1 for an exact search or > 1 for fuzzy searching) matches for each of the N spelling hypotheses are dynamically transcribed into phonemes and used to create a contextually relevant recognition grammar for the word. The word utterance (which may be recorded before and after the spelling recognition) is then recognised against the dynamic word grammar and the confidence derived in the same way as above.

The above embodiments make use of an N-best list. It is also possible to make use of dynamic contextual grammar formation as described above without N-best lists but still using applications specific knowledge sources with redundant or complementary information.

### Human Individual Identification

In this embodiment, having recognised a post code using the techniques described, a dynamic grammar for the name recognition is created and the name recognised. Confirmation of the name can be made using title and initials only to avoid use of text-to-speech.

### Directory Enquiries

The town name and street name are recognised. The electoral roll database is queried to find the names of all individuals living in that street and a dynamic grammar created for the names. The name utterance is then recognised. Confirmation of the name can be made using title and initials only to avoid use of text to speech.

### Other Modifications

It will be clear from the foregoing that many variants and modifications may be made to the above described embodiments without departing from the invention. For example, whereas speech recognition has been described above, other similar forms of recognition such as optical character recognition might be employed.

In the above embodiments, the recognition may either be as an isolated utterance, or by word-spotting a street name from within a full address. If word-spotting is used for the post code recognition and the address recognition, then the speech source may be a single utterance containing address and post code - the whole utterance may be stored, and analysed first for post code and then for address (or vice versa).

Other forms of data which may be employed for recognition purposes include bank account numbers, passport numbers, social security, national insurance or national health codes, credit card or other payment card details, and so on.

Whereas speech synthesis has been described, other forms of output such as display may be used.

For the avoidance of doubt, protection is hereby sought for any and all novel subject matter herein or combinations thereof.

In particular the invention may comprise operating a computer to identify information desired by a user, comprising: receiving a first input signal corresponding to first data associated with the information; applying a first recognition process to the first input signal to derive a plurality of possible candidate values for the first data; receiving a second input signal corresponding to second data associated with the first; and applying a second recognition process to the second input signal to derive a one or more candidate values for the second data; characterised by jointly utilising the first and second data to identify the information.

## Claims

1. A method of operating a computer to identify information desired by a user, comprising:
receiving a first input signal corresponding to first data associated with the information;
applying a first recognition process to the first input signal to derive a plurality of possible candidate values for the first data;
using the possible candidate values to generate a vocabulary;
receiving a second input signal corresponding to second data associated with the first data; and
applying a second recognition process, using the generated vocabulary, to the second input signal to derive one or more candidate values from the second data.

2. A method according to claim 1, in which said first recognition process comprises specifying a list of possible candidate values, comparing said first input signal against said list, and generating one or more outputs indicating similarity to a respective one of said possible candidate values.

3. A method according to claim 2, in which said associated values for the second data are determined prior to applying said second recognition process.

4. A method according to any preceding claim, in which said first recognition process comprises speech recognition.

5. A method according to any preceding claim, in which said second recognition process comprises speech recognition.

6. A method according to any preceding claim, in which said information comprises a desired record from a plurality of records stored in database, said record comprising at least a first field and an associated second field, the first and second data being respective values for first and second fields of the desired record, the method comprising locating the second field values stored in each record in the database which has a stored first field value corresponding to one of the possible candidate first field values; and utilising said located second field values as said associated values.

7. A method according to any preceding claim, in which at least one of said first and second data has a constrained data format.

8. A method according to any preceding claim, in which at least one of said first and second data is post code data.

9. A method according to any preceding claim, in which at least one of said first and second data is vehicle registration number data.

10. A method according to any preceding claim, in which at least one of said first and second data is personal identification code data.

11. A method according to any preceding claim, in which at least one of said first and second data has a free text format.

12. A method according to any preceding claim, in which at least one of said first and second data is address data.

13. A method according to any preceding claim, in which at least one of said first and second data is personal name data.

14. A method according to any preceding claim, in which the data stored in the second field has a more constrained format than that in the first field.

15. A method according to any preceding claim, further comprising outputting output data from said desired record to said user.

16. A method according to claim 15 appended to claim 6, in which said output data is retrieved from a third field of said desired record.

17. Apparatus for implementing the method of any preceding claim, comprising input means for receiving said first and second signals; recognition means for performing said first and second recognition processes, and a computer for utilising said first and second data.

18. A program for causing apparatus according to claim 17 to operate the method of any preceding claim.

19. A computer readable medium containing instructions for causing a processor to perform the method of any one of claims 1 to 16.
